# EUROPEAN PATENT APPLICATION

(11) **EP 4 621 001 A1**
(43) Date of publication of application: **24.09.2025**
(21) Application number: 23891225.7
(22) Date of filing: 10.10.2023
(51) Int. Cl.: C08J 5/04, E01D 22/00, E04G 23/02

(54) **BUILDING REINFORCING SHEET, METHOD FOR PRODUCING BUILDING REINFORCING SHEET AND METHOD FOR REINFORCING BUILDING**

(30) Priority: 16.11.2022 JP 2022183616
(71) Applicant: Auros Technologies LLC, Hakusan-shi, Ishikawa 920-2103 (JP)
(72) Inventor: WADA, Michiaki, Hakusan-shi, Ishikawa 920-2103 (JP)
(74) Representative: Gulde & Partner
(86) International application number: PCT/JP2023/036791
(87) International publication number: WO 2024/106067

(57) **Abstract**

An object of the present invention is to improve a sheet for reinforcing a building and a method for reinforcing a building. Provided is a sheet for reinforcing a building that includes a prepreg containing a polyphenylene sulfide resin and a carbon fiber and has a water contact angle of 50 degrees or less. It is desirable to achieve a tensile strength of 3400 MPa or more and a tensile modulus of elasticity of 210 GPa or more and 280 GPa or less (JSCE-E 541-2013), a joint strength of 3400 MPa or more and test specimen failure at areas other than a bonding surface (JSCE-E 542-2018), and a bond strength of 1.5 MPa or more and substrate failure (JSCE-E 545-2018).

## Description

### Technical Field

The present invention relates to a sheet for reinforcing a building, a method for reinforcing a building, and a manufacturing method of a sheet for reinforcing a building. The sheet for reinforcing a building of the present invention is made of a sheet obtained by a hydrophilization treatment of a prepreg containing a carbon fiber and an engineering plastic consisting of one or more selected from a polyphenylene sulfide resin, a polycarbonate, and a polyether ether ketone. The method for reinforcing a building of the present invention is characterized by using the above-mentioned sheet for reinforcing a building. In the manufacturing method of a sheet for reinforcing a building of the present invention, the sheet for reinforcing a building is fixed to a surface of a building via an adhesive.

### Background Art

Deterioration over time such as cracking and peeling of concrete surfaces in buildings such as bridges and roads is unavoidable. Deteriorated buildings need to be regularly repaired. Conventionally, a repair method has been adopted that protects a deteriorated surface of a building with a reinforcing material.

An example of the method for reinforcing a building described in PTL 1 includes a step of forming an elastic layer on a surface of a building, and an impregnation step of using a fiber sheet made by aligning reinforcing fibers in one direction, and impregnating the fiber sheet with an epoxy resin through application of an epoxy-based adhesive onto the elastic layer, thereby resulting in bond of the fiber sheet to the elastic layer. In a case where this reinforcing method is adopted, a fiber sheet is impregnated with an epoxy resin at the site of work, thus requiring careful rolling and curing. In a case where a plurality of fiber sheets are laminated, impregnation and bonding operations are required for each formation of one layer of fiber sheet. Therefore, such a reinforcing method has problems in terms of efficiency. PTL 1 also describes an example in which a plate material made by impregnating reinforcing fibers with a resin is applied instead of the above-mentioned fiber sheet. However, it is difficult for such a plate-shaped reinforcing material to be brought into close contact with a curved surface, and the locations where the reinforcing material can be applied are limited. For this reason, in actual reinforcement work for buildings, it is necessary to use the above-mentioned fiber sheet and the above-mentioned plate material in combination or to use them separately, which results in the problem that the number of steps and types of materials increase, making the work complicated.

The method for reinforcing a building described in PTL 2 requires a step of applying a curable polymer to a surface of a building, a step of curing the curable polymer to form a first layer, a step of heating an open surface of the first layer, and a step of bonding a second layer containing reinforcing fibers and a thermoplastic base material to the surface of the heated first layer. Such a reinforcing method requires heating the surface of the cured first layer at the site of work, requiring a large amount of equipment and labor.

### Citation List

### Patent Literature

[PTL 1] Japanese Patent No. 5380551
[PTL 2] Japanese Patent No. 6043485

### Summary of Invention

### Technical Problem

In Japan, there is a shortage of civil engineering workers due to the declining birthrate and aging population, and many of the buildings such as bridges and roads are reaching the period of repair at the same time, so there is a strong need to simplify methods for reinforcing buildings using reinforced fiber materials. Therefore, the present inventors have sought a reinforcing material for a building that can be applied with fewer steps and simpler operations. Solution to Problem

As a result, the present inventors have solved the above problems with a sheet for reinforcing a building that is made of a new material and has excellent performance. That is, the present invention is as follows.

### (Invention 1)

A sheet for reinforcing a building, including a prepreg containing a carbon fiber and an engineering plastic consisting of one or more selected from a polyphenylene sulfide resin, a polycarbonate, and a polyether ether ketone, in which the sheet for reinforcing a building has at least one surface exhibiting a water contact angle of 50 degrees or less.

### (Invention 2)

The sheet for reinforcing a building according to Invention 1, in which the sheet for reinforcing a building exhibits a bond strength of 1.5 MPa or more and substrate failure in a bond test according to JSCE-E 545-2018.

### (Invention 3)

The sheet for reinforcing a building according to Invention 1, in which the sheet for reinforcing a building exhibits a tensile strength of 3400 MPa or more and a tensile modulus of elasticity of 210 GPa or more and 280 GPa or less in a tensile test according to JSCE-E 541-2013.

### (Invention 4)

The sheet for reinforcing a building according to Invention 1, in which the sheet for reinforcing a building exhibits a joint strength of 3400 MPa or more and test specimen failure at areas other than a bonding surface in a joint test according to JSCE-E 542-2018.

### (Invention 5)

The sheet for reinforcing a building according to Invention 1, in which the engineering plastic consists of a polyphenylene sulfide resin.

### (Invention 6)

The sheet for reinforcing a building according to Invention 1, in which the carbon fiber has a basis weight of 150 g/m² or more.

### (Invention 7)

A manufacturing method of a sheet for reinforcing a building, the manufacturing method including the following steps 1 and 2,
· step 1: a step of manufacturing a prepreg by impregnating a carbon fiber with an engineering plastic consisting of one or more selected from a polyphenylene sulfide resin, a polycarbonate, and a polyether ether ketone; and
· step **2:** a step of hydrophilizing at least one surface of the prepreg,
in which the sheet for reinforcing a building has at least one surface exhibiting a water contact angle of 50 degrees or less.

### (Invention 8)

The manufacturing method according to Invention 7, in which the sheet for reinforcing a building exhibits a bond strength of 1.5 MPa or more and substrate failure in a bond test according to JSCE-E 545-2018.

### (Invention 9)

The manufacturing method according to Invention 7, in which the sheet for reinforcing a building exhibits a tensile strength of 3400 MPa or more and a tensile modulus of elasticity of 210 GPa or more and 280 GPa or less in a tensile test according to JSCE-E 541-2013.

### (Invention 10)

The manufacturing method according to Invention 7, in which the sheet for reinforcing a building exhibits a joint strength of 3400 MPa or more and test specimen failure at areas other than a bonding surface in a joint test according to JSCE-E 542-2018.

### (Invention 11)

The manufacturing method according to Invention 7, in which the engineering plastic consists of a polyphenylene sulfide resin.

### (Invention 12)

The manufacturing method according to Invention 7, in which, in the step 2, the at least one surface of the prepreg is hydrophilized by a plasma treatment.

### (Invention 13)

A method for reinforcing a building, the method including a step of bonding the sheet for reinforcing a building according to any one of Inventions 1 to 6 to a surface of a building.

### (Invention 14)

The method for reinforcing a building according to Invention 13, in which the sheet for reinforcing a building according to any one of Inventions 1 to 6 is bonded to the surface of the building via a curable adhesive.

### Advantageous Effects of Invention

The sheet for reinforcing a building of the present invention (hereinafter, referred to as the "sheet of the present invention") has a high strength and exhibits excellent adhesiveness to a building. The method for reinforcing a building using the sheet of the present invention (hereinafter, referred to as the "reinforcing method of the present invention") does not require a resin impregnation step at the reinforcement work site. Moreover, since the sheet of the present invention can be easily cut, the reinforcing method of the present invention can be applied to a variety of surfaces of buildings. The present invention makes it possible to carry out the reinforcement of buildings with fewer steps and with simpler operations.

### Brief Description of Drawings

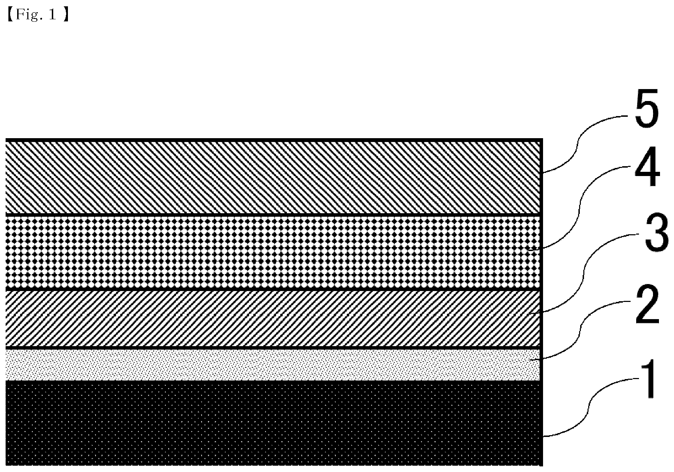

Fig. 1 schematically shows an application example of the sheet for reinforcing a building of the present invention.

### Description of Embodiments

### [1. Sheet for reinforcing building]

### [Prepreg]

The sheet of the present invention is made of a prepreg containing a carbon fiber and an engineering plastic consisting of one or more selected from a polyphenylene sulfide resin, a polycarbonate, and a polyether ether ketone, that is, a prepreg made by impregnating an engineering plastic consisting of one or more selected from a polyphenylene sulfide resin, a polycarbonate, and a polyether ether ketone between carbon fibers aligned in a flat elongated shape. In the present invention, a polyphenylene sulfide resin is preferably used as the engineering plastic.

The sheet of the present invention has at least one surface exhibiting a water contact angle of 50 degrees or less. This means that at least one surface of the prepreg has sufficient hydrophilicity. The hydrophilicity is developed by subjecting at least one surface of the prepreg to chemical modification or plasma irradiation to generate hydrophilic groups such as -OH and -COOH on that surface of the prepreg.

The sheet of the present invention has excellent mechanical strength and heat resistance because the main body of the sheet of the present invention is a sheet made by impregnating a carbon fiber as a reinforcing material with a resin selected from a polyphenylene sulfide resin, a polycarbonate, and a polyether ether ketone, which are common as engineering plastics. The sheet of the present invention contains a thermoplastic resin and therefore can also be applied to curved surfaces and minute parts with increased flexibility by heating.

### [Polyphenylene sulfide resin]

Any known linear polyphenylene sulfide resin can be used without any limitation as the polyphenylene sulfide resin. The "linear polyphenylene sulfide resin" is well known in the art as a representative type of polyphenylene sulfide. The linear polyphenylene sulfide resin is a linear polymer consisting essentially of p-phenylene sulfide units in which p-phenylene units and sulfide bonding units are alternately bonded, and can contain a small amount of m-phenylene sulfide units as long as it has a substantially linear structure. The method for manufacturing a linear polyphenylene sulfide resin is also well known, industrially representative methods of which include the Phillips method which involves condensation polymerization of p-dichlorobenzene and sodium sulfide in N-methyl-2-pyrrolidone at 200°C to 250°C, and the Dow Chemical method which involves self-condensation polymerization of p-bromthiophenylene metal salts.

### [Polycarbonate]

Any known polycarbonate can be used without any limitation as the polycarbonate. The polycarbonate is typically manufactured by a polycondensation reaction of bisphenol A and carbonyl chloride (phosgene method) or by a transesterification method of diphenyl carbonate.

### [Polyether ether ketone]

The polyether ether ketone resin is a resin consisting of the following repeating structure. 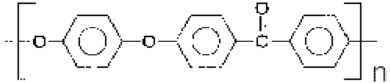
- n:: the number of repetitions

### [Carbon fiber]

Any carbon fiber used in fiber-reinforced plastics (FRP) can be used without any limitation as the carbon fiber. Usable carbon fibers are generally a PAN-based carbon fiber and a pitch-based carbon fiber.

The ratio (weight or volume) of polyphenylene sulfide resin to carbon fiber, the thickness of one sheet of prepreg, and the like are appropriately set within a range in which the sheet of the present invention has all of tensile performance, joint performance, and bond performance which will be described later. In a case where the sheet of the present invention is used for reinforcing a curved surface, flexibility can be improved by making the sheet thinner or lowering the carbon fiber content within a range in which the sheet of the present invention has all of the above tensile performance, joint performance, and bond performance.

In view of the balance among tensile performance, joint performance, bond performance, and flexibility, the basis weight of carbon fibers in the sheet of the present invention is generally 150 g/m² or more, preferably 150 g/m² or more and 400 g/m² or less, and more preferably 150 g/m² or more and 300 g/m² or less, and the content of carbon fibers in the sheet of the present invention is 20% or more and 80% or less, preferably 30% or more and 70% or less, and more preferably 40% or more and 60% or less.

The sheet of the present invention can contain other thermoplastic resins in addition to the polyphenylene sulfide resin described above as a resin component within a range that does not impair performance. In addition, the sheet of the present invention can contain a reinforcing fiber other than the carbon fiber within a range that does not impair performance.

### [Bond performance]

The sheet of the present invention preferably exhibits a bond strength of 1.5 MPa or more and substrate failure in a bond test according to JSCE-E 545-2018 (Test method for bond of continuous fiber sheets to concrete specified in the 2018 Concrete Standard Specifications established by the Japan Society of Civil Engineers). The sheet of the present invention having such a bond strength can be firmly brought into close contact with surfaces of various outdoor buildings such as bridges, roads, and ports and is therefore suitable for repairing these outdoor buildings.

### [Tensile performance]

The sheet of the present invention preferably exhibits a tensile strength of 3400 MPa or more and a tensile modulus of elasticity of 210 GPa or more and 280 GPa or less in a tensile test according to JSCE-E 541-2013 (Tensile test method for continuous fiber sheets specified in the 2013 Concrete Standard Specifications established by the Japan Society of Civil Engineers). The sheet of the present invention having such tensile performance can maintain and improve the strength of various outdoor buildings such as bridges, roads, and ports.

### [Joint performance]

The sheet of the present invention preferably exhibits a joint strength of 3400 MPa or more and test specimen failure at areas other than a bonding surface in a joint test according to JSCE-E 542-2018 (Joint test method for continuous fiber sheets specified in the 2018 Concrete Standard Specifications established by the Japan Society of Civil Engineers). The sheet of the present invention having such joint performance can be placed on surfaces of various outdoor buildings such as bridges, roads, and ports and can resist pressure, vibration, twisting, and the like, so that these outdoor buildings can be reinforced over a long period of time.

By specifying the tensile strength, tensile modulus of elasticity, joint strength, and bondability described above, the sheet of the present invention is limited to a reinforcing material for buildings such as bridges and roads, which has a specific balance of tensile strength, tensile modulus of elasticity, joint strength, and bondability. The reinforcing material with such a specific balance is effective in many of the current reinforcement works for buildings such as bridges and roads in Japan.

The sheet of the present invention may be, for example, a sheet that satisfies conditions of two or more of the bond performance, the tensile performance, and the joint performance. The sheet of the present invention may be a sheet that has all of the bond performance, the tensile performance, and the joint performance, that is, a sheet that exhibits a bond strength of 1.5 MPa or more and substrate failure in a bond test according to JSCE-E 545-2018 (Test method for bond of continuous fiber sheets to concrete specified in the 2018 Concrete Standard Specifications established by the Japan Society of Civil Engineers), exhibits a tensile strength of 3400 MPa or more and a tensile modulus of elasticity of 210 GPa or more and 280 GPa or less in a tensile test according to JSCE-E 541-2013 (Tensile test method for continuous fiber sheets specified in the 2013 Concrete Standard Specifications established by the Japan Society of Civil Engineers), and exhibits a joint strength of 3400 MPa or more and test specimen failure at areas other than a bonding surface in a joint test according to JSCE-E 542-2018 (Joint test method for continuous fiber sheets specified in the 2018 Concrete Standard Specifications established by the Japan Society of Civil Engineers).

The sheet of the present invention itself exhibits an excellent mechanical strength and has high bondability to concrete. The surface of a concrete building covered with the sheet of the present invention is strongly reinforced over a long period of time.

### [2. Manufacturing method of sheet for reinforcing building]

The manufacturing method of the sheet of the present invention includes Step 1: a step of manufacturing a prepreg by impregnating a carbon fiber with an engineering plastic consisting of one or more selected from a polyphenylene sulfide resin, a polycarbonate, and a polyether ether ketone, and Step 2: a step of hydrophilizing at least one surface of the prepreg. In the manufacturing method of the sheet of the present invention, a polyphenylene sulfide resin is preferably used as the engineering plastic.

### [Step 1]

In the step 1, any known method or equipment that can be used in the manufacture of a prepreg obtained by impregnating a fiber with a thermoplastic resin can be used without any limitation. In the step 1 of the present invention, both a compression molding method and a roll molding method can be used. For example, a laminate sheet (semi-preg) made of carbon fibers that are continuously conveyed in an aligned state and a heated engineering plastic sheet consisting of one or more selected from a polyphenylene sulfide resin, a polycarbonate, and a polyether ether ketone is manufactured, the semi-preg is passed between rolls and pressed to impregnate the carbon fibers with the engineering plastic, and then a sheet-like carbon fiber impregnated with the engineering plastic is cooled and dried to obtain a prepreg which is a raw material for the sheet of the present invention.

The number of carbon fiber layers and engineering plastic layers in the semi-preg is not limited. In the step 1 of the present invention, a semi-preg is used in which two surface layers are made of engineering plastic layers, and a total of n carbon fiber layers (n is an integer of 1 or more) and a total of (n+1) engineering plastic layers are alternately laminated. A semi-preg satisfying generally 1 ≤ n ≤ 5 and preferably 1 ≤ n ≤ 3 is used.

### [Step 2]

In the step 2, at least one surface of the prepreg obtained in the step 1 is hydrophilized preferably by a plasma treatment. The plasma treatment device and plasma treatment conditions are not limited as long as the water contact angle on the one surface is 50 degrees or less, preferably 45 degrees or less, and more preferably 35 degrees or less.

The plasma treatment is typically carried out in such a manner that the prepreg obtained in the step 1 is introduced into a drum type plasma irradiation device or a flat plate type plasma irradiation device, and at least one surface of the prepreg is irradiated with plasma in the device. It is presumed that reactive groups such as a hydroxyl group (-OH) and a carboxyl group (-COOH) are generated on the surface by this plasma treatment. For this reason, the plasma treatment in the present invention can also be positioned as a type of hydrophilization treatment. The obtained sheet of the present invention exhibits high bondability to concrete or an adhesive such as an epoxy-based adhesive.

In a case where the drum type plasma irradiation device is used, the plasma irradiation voltage is generally 1.0 kV or more and 4.0 kV or less, preferably 1.5 kV or more and 3.5 kV or less, and more preferably 1.5 kV or more and 3.0 kV or less. The plasma treatment can be carried out by another method such as a flat plate type plasma irradiation device under conditions that make it possible to obtain equivalent plasma irradiation intensity. It should be noted that the plasma irradiation conditions may be defined in terms of electric power (W).

The sheet of the present invention has at least one surface exhibiting a water contact angle of 50 degrees or less. The plasma irradiation conditions in the step 2 are set such that the water contact angle of the plasma irradiated surface is maintained at 50 degrees or less for at least 60 days from the end of plasma irradiation. The conditions under which at least one surface exhibiting a water contact angle of 50 degrees or less can be formed on the sheet of the present invention are set for each type of plasma irradiation device.

### [3. Method for reinforcing building]

The reinforcing method of the present invention includes a step of bonding the sheet of the present invention to a surface of a building. An adhesive is used for the bonding. In the reinforcing method of the present invention, the adhesive is not particularly limited, and any of an inorganic adhesive such as a silicon-based adhesive or a cement-based adhesive, a curable adhesive such as an epoxy-based adhesive, a urethane-based adhesive, an acrylic adhesive, or a silicone-based adhesive, and a hot melt adhesive can be used. Generally, a curable adhesive such as an epoxy-based adhesive is used.

In a case where the reinforcing method of the present invention is used, an adhesive is applied to a surface of a building to be reinforced at the site of work, and the sheet of the present invention is brought into close contact with the adhesive surface. Preferably, the surface is appropriately cleaned and polished before the application. In addition, preferably, a primer is applied onto the cleaned and polished surface to improve the adhesiveness between the surface and the adhesive. In a case where the sheet of the present invention is brought into close contact with the adhesive surface, the sheet of the present invention is generally pressed with a roller, brush, trowel (squeegee), or the like so that no air remains between the adhesive and the sheet. In a case where the reinforcing surface with which the sheet of the present invention is brought into close contact is dried to cure the adhesive, the sheet of the present invention firmly bonds to the surface of the building, thereby reinforcing and protecting the surface. As described above, the reinforcing method of the present invention does not include a step of impregnating reinforcing fibers with a resin at the site of work. Therefore, the reinforcing method of the present invention has fewer steps than related art methods and does not require large equipment or complicated operations at the site of work.

In actual reinforcement work, after the sheet of the present invention is bonded to a surface of a building, the outermost surface may be further finished and painted to prevent deterioration, improve water repellency, improve antifouling properties, and/or to improve display and aesthetic appearance.

Fig. 1 schematically shows a surface of a building reinforced with the sheet of the present invention. A primer (2), an adhesive (3), and a sheet (4) of the present invention are laminated in this order on a surface of a concrete wall (1). In the example shown in Fig. 1, the surface of the sheet (4) of the present invention is finished with paint, and a paint layer (5) is formed thereon.

In a case where the reinforcing method of the present invention is applied to a large-area work surface, it is possible to prepare a plurality of sheets of the present invention and bond the sheets of the present invention one after another so that the edges of the sheets overlap. In addition, a plurality of sheets of the present invention can be laminated at one location depending on the shape and surface condition of the building. In this case, a laminate sheet in which a plurality of sheets of the present invention are laminated using the above-mentioned adhesive can be prepared in advance, and this laminate sheet can be bonded to the surface to be reinforced at the site of work.

### [Examples]

### [Manufacture of sheet for reinforcing building]

"FORTRON" (manufactured by Kureha Corporation) was used as a polyphenylene sulfide resin. A carbon fiber sheet was manufactured by forming a carbon fiber "TORAYCA (registered trademark) T700" (manufactured by Toray Industries, Inc.) into a sheet. A semi-preg was manufactured by discharging a molten polyphenylene sulfide resin from a T-die onto the carbon fiber sheet so that the outermost layer was a polyphenylene sulfide resin layer, the total thickness of the polyphenylene sulfide resin layer was 100 µm, and the total thickness of the carbon fiber layer was 100 µm. This semi-preg was conveyed by a belt and heated and pressed between rolls to impregnate the carbon fibers with the polyphenylene sulfide resin layer. As a result, a prepreg containing carbon fibers was obtained with a basis weight of carbon fibers of 200 g/m² and a content of carbon fibers of 50% by volume.

One surface of this prepreg was subjected to a vacuum plasma treatment to obtain a sheet of the present invention. In a case where the water contact angle was periodically measured at 5 randomly selected points on the plasma irradiated surface immediately after plasma irradiation and the values of the 5 points were averaged, the average value of the water contact angle was maintained at 40 degrees or less until 60 days after plasma irradiation.

### [Manufacture of comparative sheet]

The prepreg obtained by the method described above was used as a comparative sheet without being subjected to a plasma treatment.

### [Tensile test]

Table 1 shows the results of a tensile test carried out according to JSCE-E 541-2013 on test specimens (Examples 1 to 4) obtained from the sheet of the present invention. As shown in Table 1, the sheet of the present invention has sufficient tensile properties required for building repair materials. That is, the sheet of the present invention has achieved a tensile strength of 3400 MPa or more and a tensile modulus of elasticity of 210 GPa or more and 280 GPa or less according to JSCE-E 541-2013, which are the current goals to be achieved in the reinforcement of bridges and roads. From the results of such a tensile test, it can be said that the sheet of the present invention can form a strong reinforcing surface on the surface of a building, and can also exhibit strong resistance to distortion, vibration, and surface cracking of the building.

**[Table 1]**

| | Tensile strength (MPa) | Tensile modulus of elasticity (GPa) |
|---|---|---|
| Example 1 | 3749 | 249 |
| Example 2 | 4136 | 264 |
| Example 3 | 3905 | 245 |
| Example 4 | 4011 | 245 |

### [Joint test]

Table 2 shows the results of a joint test carried out according to JSCE-E 542-2018 on a set of two test specimens obtained from the sheet of the present invention (Examples 5 to 8) and a set of two test specimens obtained from the comparative sheet (Comparative Examples 1 to 3). AG-100KNplus (manufactured by Shimadzu Corporation) was used as a joint strength tester. A two-component mixed epoxy-based adhesive (manufactured by Alteco Co., Ltd.) was used to bond the joints.

**[Table 2]**

| | Joint strength (Tensile strength) (MPa) | Form of failure |
|---|---|---|
| Example 5 | 3770 | Failure at areas other than bonding surface |
| Example 6 | 4042 | Failure at areas other than bonding surface |
| Example 7 | 4235 | Failure at areas other than bonding surface |
| Example 8 | 3896 | Failure at areas other than bonding surface |
| Comparative Example 1 | 568 | Failure at bonding surface |
| Comparative Example 2 | 720 | Failure at bonding surface |
| Comparative Example 3 | 577 | Failure at bonding surface |

From the results shown in Table 2, it can be seen that the sheet of the present invention has achieved a joint strength of 3400 MPa or more and failure at areas other than a bonding surface according to JSCE-E 542-2018, which are the goals to be achieved in building repair materials. From the results of such a joint test, it can be said that, in a case where the cut sheets of the present invention are spliced together on the surface of a building, there is no weakness in the spliced portion and the entire surface of the building covered with the sheet of the present invention is strongly reinforced.

On the other hand, the sheets of Comparative Examples 1 to 3 are weak at the spliced portions, and have problems in terms of practicality.

### [Bond test]

A precast unreinforced concrete flat plate conforming to JIS A 5371 was prepared. One surface of this concrete was polished with a #60 grindstone. An epoxy-based resin "Heat Resistant Primer" (manufactured by Nippon Steel Chemical & Material Co., Ltd.) was applied to the polished surface in an amount of 0.2 kg/m² and dried. A two-component mixed epoxy-based resin "F-30" (manufactured by Alteco Co., Ltd.) was applied to the surface of the dried primer in an amount of 0.6 kg/m². The sheet of the present invention was attached to the applied surface which was then air-dried for one day to produce a reinforced concrete flat plate (Examples 9 to 11). In addition, the comparative sheet was attached to the applied surface to produce a reinforced concrete flat plate in the same manner as in Examples 9 to 11 (Comparative Examples 4 to 6). Table 3 shows the results of a bond test carried out on the reinforced concrete flat plates according to JSCE-E 545-2018. A Kenken type bond tester LPT-1500 (manufactured by Oxjack Co., Ltd.) was used to measure the bond strength.

**[Table 3]**

| | Bond strength (MPa) | Form of failure |
|---|---|---|
| Example 9 | 5.63 | Failure in concrete |
| Example 10 | 6.25 | Failure in concrete |
| Example 11 | 6.88 | Failure in concrete |
| Comparative Example 4 | 2.50 | Failure at bonding surface |
| Comparative Example 5 | 3.13 | Failure at bonding surface |
| Comparative Example 6 | 3.75 | Failure at bonding surface |

From the results shown in Table 3, it can be seen that the sheet of the present invention has achieved a bond strength of 1.5 MPa or more and substrate failure according to JSCE-E 545-2018, which are the goals to be achieved in building repair materials. From the results of such a bond test, it can be said that the sheet of the present invention is difficult to peel off from the surface of a building after being bonded, and exhibits a reinforcing effect over a long period of time.

On the other hand, the sheets of Comparative Examples 4 to 6 had weak adhesiveness to a concrete flat plate and exhibited a poor reinforcing effect.

### [Weather resistance test]

The sheet of the present invention obtained by the above-mentioned manufacturing method was exposed to a laboratory light source under conditions compliant with JIS A 1415. This exposure is a simulation of direct outdoor exposure. In this exposure, an open frame carbon arc lamp (WS-A) was used as a light source, and the detailed conditions of test method WS-A specified in JIS A 1415 (6.2 Table 5) were followed.

The tensile strength and tensile modulus of elasticity of test specimens (Examples 12, 13, 14, and 15) obtained from the sheet of the present invention after exposure were measured. Table 4 shows the results of a tensile test carried out according to JSCE-E 541-2013. Table 4 also shows the results of Examples 1, 2, 3, and 4 for the sake of reference.

**[Table 4]**

| Example | Exposure | Tensile strength (MPa) | Tensile modulus of elasticity (GPa) |
|---|---|---|---|
| 12 | Yes | 4108 | 262 |
| 13 | Yes | 4360 | 272 |
| 14 | Yes | 3858 | 272 |
| 15 | Yes | 4089 | 266 |
| 1 | No | 3749 | 249 |
| 2 | No | 4136 | 264 |
| 3 | No | 3905 | 245 |
| 4 | No | 4011 | 245 |

No significant difference was observed in the measurement results of tensile strength and tensile modulus of elasticity between the set consisting of Examples 12 to 15 and the set consisting of Examples 1 to 4. The sheet of the present invention has excellent weather resistance and exhibits a less decrease in strength even if left outdoors for a long period of time. From this, it can be seen that the outdoor building reinforced with the sheet of the present invention maintains good strength over a long period of time.

### Industrial Applicability

The sheet for reinforcing a building of the present invention makes it possible to achieve improved efficiency and labor-saving of reinforcing works for buildings. The sheet for reinforcing a building of the present invention is expected to be a high-quality civil engineering and construction material. In particular, the sheet for reinforcing a building of the present invention using polyphenylene sulfide as an engineering plastic is useful as a new, high-quality civil engineering and construction material.

Furthermore, the sheet for reinforcing a building of the present invention has good weather resistance. The sheet for reinforcing a building of the present invention is effective for repairing an outdoor building.

### Reference Signs List

- 1:: concrete wall (building)
- 2:: primer
- 3:: adhesive
- 4:: sheet for reinforcing a building of the present invention
- 5:: paint layer

## Claims

1. A sheet for reinforcing a building, comprising:
a prepreg containing a carbon fiber and an engineering plastic consisting of one or more selected from a polyphenylene sulfide resin, a polycarbonate, and a polyether ether ketone,
wherein the sheet for reinforcing a building has at least one surface exhibiting a water contact angle of 50 degrees or less.

2. The sheet for reinforcing a building according to claim 1, wherein the sheet for reinforcing a building exhibits a bond strength of 1.5 MPa or more and substrate failure in a bond test according to JSCE-E 545-2018.

3. The sheet for reinforcing a building according to claim 1, wherein the sheet for reinforcing a building exhibits a tensile strength of 3400 MPa or more and a tensile modulus of elasticity of 210 GPa or more and 280 GPa or less in a tensile test according to JSCE-E 541-2013.

4. The sheet for reinforcing a building according to claim 1, wherein the sheet for reinforcing a building exhibits a joint strength of 3400 MPa or more and test specimen failure at areas other than a bonding surface in a joint test according to JSCE-E 542-2018.

5. The sheet for reinforcing a building according to claim 1, wherein the engineering plastic consists of a polyphenylene sulfide resin.

6. The sheet for reinforcing a building according to claim 1, wherein the carbon fiber has a basis weight of 150 g/m² or more.

7. A manufacturing method of a sheet for reinforcing a building, the manufacturing method comprising the following steps 1 and 2:
· step 1: a step of manufacturing a prepreg by impregnating a carbon fiber with an engineering plastic consisting of one or more selected from a polyphenylene sulfide resin, a polycarbonate, and a polyether ether ketone; and
· step 2: a step of hydrophilizing at least one surface of the prepreg,
wherein the sheet for reinforcing a building has at least one surface exhibiting a water contact angle of 50 degrees or less.

8. The manufacturing method according to claim 7, wherein the sheet for reinforcing a building exhibits a bond strength of 1.5 MPa or more and substrate failure in a bond test according to JSCE-E 545-2018.

9. The manufacturing method according to claim 7, wherein the sheet for reinforcing a building exhibits a tensile strength of 3400 MPa or more and a tensile modulus of elasticity of 210 GPa or more and 280 GPa or less in a tensile test according to JSCE-E 541-2013.

10. The manufacturing method according to claim 7, wherein the sheet for reinforcing a building exhibits a joint strength of 3400 MPa or more and test specimen failure at areas other than a bonding surface in a joint test according to JSCE-E 542-2018.

11. The manufacturing method according to claim 7, wherein the engineering plastic consists of a polyphenylene sulfide resin.

12. The manufacturing method according to claim 7, wherein, in the step 2, the at least one surface of the prepreg is hydrophilized by a plasma treatment.

13. A method for reinforcing a building, the method comprising:
a step of bonding the sheet for reinforcing a building according to any one of claims 1 to 6 to a surface of a building.

14. The method for reinforcing a building according to claim 13, wherein the sheet for reinforcing a building according to any one of claims 1 to 6 is bonded to the surface of the building via a curable adhesive.
